# EUROPEAN PATENT APPLICATION

(11) **EP 4 838 124 A1**
(43) Date of publication of application: **11.11.2026**
(21) Application number: 25174763.0
(22) Date of filing: 07.05.2025
(51) Int. Cl.: F16L 33/207, B25B 27/10

(54) **A PRESS FITTING ASSEMBLY, PRESSING TOOL FOR A PRESS FITTING ASSEMBLY AS WELL AS METHOD FOR CONNECTING A PRESS FITTING ASSEMBLY WITH A PIPE**

(71) Applicant: Uponor Innovation AB, 737 61 Virsbo (SE)
(72) Inventor: Heiskanen, Mikko, 15560 Nastola (FI); Rotso, Vesa, 15240 Lahti (FI)
(74) Representative: Li Schrag, Yue

(57) **Abstract**

The invention pertains to a press fitting assembly (100; 102) for pipe joints, particularly suitable for multilayer composite pipes (200). The assembly includes a fitting body (2) and a press sleeve (10) attached to it, featuring a cylindrical press area (18) designed to be compressed for secure connection. Integral to the sleeve is at least one stop ring (14) defining the press area (18) axially. The press sleeve (10) features an indicator surface (20), distinct in color from the press area (18), and an indicator ring (30). The indicator ring (30) is securely attached yet axially slidable on the sleeve, moving between two positions: one where it reveals the indicator surface (20) to signal no pressing tool engagement, and another where it conceals the indicator surface (20).

## Description

### Technical Field

The present invention refers to a press fitting assembly as described in the preamble of claim 1. The present invention further belongs to a pressing tool according to the preamble of claim 14 as well as to a method according to the preamble of claim 15.

### Background and prior art

Press fittings are widely used in plumbing and construction systems for multilayer composite pipes transporting water, gas, and fluids under pressure. They provide secure connections without threading or welding, making installations quicker, safer, and more cost-effective than traditional methods.

The technology includes fitting bodies and press sleeves. The fitting body connects with the pipe, while the deformed press sleeve compresses the pipe against the fitting profile to create a leak-proof seal. Modern systems feature indicators, like color codes, to simplify installation.

WO 2019 201 5 00 describes a press fitting designed for pipe connections that includes a fitting body and a press sleeve. The press fitting includes various features to ensure proper engagement with a pipe, such as viewing windows to verify correct pipe insertion. The press sleeve has a cylindrical pressing area and a projecting element that holds a tubular banderole in place. This banderole, which is located around the pressing area, can rotate relative to the press sleeve and is meant to be at least partially destroyed when pressed with a tool. To indicate that a fitting is pressed the banderole falls off and must be thrown out. One considerable downside of this press fitting is the production of waste. Plastic debris, such as the banderoles or sleeve foils, are generated which can clutter job sites, causing environmental concerns and creating inefficiencies. This wastefulness is particularly problematic as it does not align well with increasing environmental awareness and legislation aimed at reducing plastic waste.

EP 2 918 375 A1 relates to a pressing jaw designed for creating non-detachable pipe joints. The pressing jaw is composed of an upper jaw half and a lower jaw half, both pivotally mounted around a rotation axis. These jaw halves enclose a receiving region, and are capable of pivoting between open and closed positions, substantially perpendicular to the receiving region axis. A key feature of the invention is the inclusion of at least one pushing unit, which can be displaced parallel to the receiving region axis, allowing for efficient manipulation and securing of pipe fittings. This fitting uses tiny markings to show connection status, which require careful scrutiny to avoid errors.

### Presentation of the invention: Objective, solution, advantages

The invention aims to further develop a press fitting assembly as described above, a pressing tool as described above as well as a method as described above such that, visibility of the connection status is facilitated, waste production is reduced and usability is enhanced with minor modifications.

This problem is solved by a press fitting assembly according to claim 1, a pressing tool according to claim 14 as well as a method according to claim 15. Advantageous embodiments are described in the respective dependent claims.

The invention is based on the idea to provide
an indicator surface of a different color to the press area of the press sleeve and
an indicator ring axially slidable on the press sleeve between
   - a first position in which it coaxially surrounds at least one section of the press area, thus uncovering the indicator surface (20) to provide a visual indication that no pressing tool (300) has been arranged on the press area (18), and
   - a further position, in which it is offset from the press area (18) and covers the indicator surface (20).

This press fitting assembly is well-suited for applications involving multilayer composite pipes, offering durability and simplicity where reliability and precision are beneficial. Through these designed features, the assembly helps both professional installers and end-users quickly ascertain the assembly status, promoting straightforward installations with reduced error risks.

According to an embodiment of the present invention, the indicator ring is securely attached to the stop ring and axially slidable on the stop ring, in particular on a curved surface of the stop ring, between the first position and the further position.

The integration of the indicator ring with the stop ring enhances the press fitting assembly's user-friendly design, providing reliable feedback without the need for complex systems, such as electronic systems.

The indicator ring can comprise at its end faced to the press sleeve at least one clamping element, in particular a lip, being designed to engage with the stop ring, wherein in the first position, the clamping element engages with the stop ring, in particular with an end of the stop ring facing the press sleeve, providing an elastic clamping force that creates a preload or pre-tension between the clamping element and the stop ring.

The clamping element contributes to stability and consistency during the assembly process. It engages with the stop ring, particularly the end of the stop ring facing the press sleeve. This interaction helps maintain the indicator ring in the initial position, where the indicator surface is visible, while also reducing chances of inadvertent slippage or displacement due to vibrations or external forces. Through elastic preload, the assembly aims to support the suitable attachment of the clamping element to the stop ring, facilitating a secure connection prior to the pressing process.

Thus, an embodiment related to claim 1, comprises a pre-tensioned indicator ring. This embodiment is characterized by an indicator ring that is pre-tensioned during assembly, enabling effective movement to cover the indicator surface, for example an indication color ring. Movement is facilitated by interaction with a press jaw edge, assisting in guiding the ring and marking pressing operation completion. Its practical application lies in transitioning from an initial state-where the indicator color is visible signifying an uncompleted pressing operation-to a post-compression state where the color ring is concealed, confirming tool engagement.

The pre-tensioned and sliding indicator rings offer a comprehensive indicatory system perceptive of the assembly's status, adaptable to conditions.

In connection therewith or independently therefrom, the indicator surface arranged offset from the press area, can be a first indicator surface, and the stop ring can comprise at least one further indicator surface adjacent to the press area, wherein the respective indicator surfaces have different colors.

The respective indicator surfaces offer varied color schemes that clarify assembly status. In particular, the first indicator surface is separated from the press area by the further indicator surface, serving as a visual guide to denote pressing actions. These color variations enhance visibility and may assist users in distinguishing between different states of the assembly process, reducing risks of misinterpretation.

In its initial position, the press indicator ring conceals the further indicator surface while revealing the first indicator surface. This setup visually suggests that the press area has not yet undergone pressing, allowing users to verify its uncompleted status swiftly.

Upon moving to the further position, the press indicator ring covers the first indicator surface and exposes the further indicator surface. This arrangement signals the successful execution of pressing actions on the press area, indicating the progress of the mechanical connection.

With differently colored indicator surfaces, the assembly enables a quick, reliable assessment of the pressing status during installation or maintenance. This setup may minimize assembly errors by utilizing color-coded indicators of completion. It corresponds with intuitive visual mechanics anticipated in precision-based environments, promoting efficient assembly practices.

According to a further embodiment of the present invention, the indicator ring can be securely attached to a cylindrical corpus comprising the cylindrical press area of the press sleeve and be axially slidable on the cylindrical corpus between the first position and the further position.

The secure attachment of the indicator ring to the cylindrical structure contributes to alignment stability during axial sliding. The press area serves as the interaction zone within this corpus-by structurally integrating with the cylindrical corpus rather than the stop ring, the indicator ring may benefit from more centralized guidance throughout its movement. This setup can potentially reduce unintended displacement, helping reliable press status communication.

In its established configuration, the indicator ring might slide axially along the cylindrical corpus, allowing it to transit between a first and further position. This movement enables the uncovering or covering of indicator surfaces, depending on the particular assembly stage.

The indicator ring can comprise an elastic protrusion, such as a spring arm or an indicator hook, and the press sleeve can comprises at least one recess, in particular an indicator window or indicator hole, adjacent to the stop ring on the side facing the press area, designed to receive the elastic protrusion of the indicator ring.

In the initial position, the indicator ring is axially offset from the recess, and the elastic protrusion extends in its expanded configuration. Elasticity allows it to reach from areas offset from the recess to the recess itself. This supports stabilizing the ring's position, maintaining a visual indication state before pressing operations initiate.

Upon transitioning to the further position or subsequent position, the indicator ring moves into the recess. In this setup, the elastic protrusion is compressed between the stop ring and the indicator ring.

According to an advantageous embodiment, in the first position when no pipe is present in the press sleeve, the elastic protrusion extends through the recess into an interior space of the press sleeve, with its end either flush with the circumference of the press sleeve or positioned within the interior space. Conversely, when a pipe is arranged in the sleeve in such way that a secure connection can be established between the pipe and the fitting body by compressing the sleeve, the elastic protrusion extends through the recess to an exterior space surrounding the press fitting assembly, with its end protruding radially outward beyond the circumference of the press sleeve, indicating that the pipe is correctly arranged in the press sleeve.

This embodiment involves a sliding press indicator ring configuration comprising an elastic protrusion, such as a spring arm or an indicator hook. Here, the indicator ring displays both pipe insertion status and completion of sleeve pressing, through the elastic protrusion, for example through a spring mechanism, activated by pipe movement within the sleeve. The elastic protrusion provides a responsive indication system adapting to the pipe's axial movements, allowing the indicator ring to autonomously adapt its position. This interaction grants users intuitive visualization regarding the pipe's positional and pressing state, assuring proper assembly. The spring mechanism further plays a role in showcasing any deviation or inadequacy in insertion and pressing, allowing for corrective measures.

To enhance visibility of the end of the elastic protrusion, this end is marked with at least one color, in particular with the reflective color.

In combination herewith or alternatively thereto, the indicator surface can be marked with at least one reflective color that interacts with light to produce visible color effects, for example color constancy, color shifting, or other optical phenomena observable under varying viewing angles or lighting conditions.

The incorporation of reflective colors within the indicator surface is a development that leverages optical properties for improved communication, providing a visual distinction that hints at the state of the press fitting assembly. When light interacts with the reflective elements of the color, it can lead to appearance shifts that are beneficial in environments with fluctuating lighting or when viewed from diverse angles. This helps users to discern the indicator surface status from a distance or within complex operational conditions, reducing potential ambiguity.

In practice, the use of reflective colors suggests that the indicator surface can maintain visibility irrespective of external environmental variables, such as changes in lighting or observer position. This option supports ease of monitoring during the assembly or maintenance of pipe systems and provides intuitive visual feedback to aid in identifying whether pressing operations are complete or pending.

In the development of a further press fitting assembly, the indicator ring is crafted using an injection molding process, focusing on precision manufacturing techniques to potentially enhance component quality and consistency.

According to a further embodiment of the present invention, the press fitting assembly is designed to cooperate with a pressing tool such that the press sleeve is radially compressible by opposing press jaws of the pressing tool, wherein the indicator ring and/or the pressing tool comprises at least one inclined contact surface being angled relative to the longitudinal axis of the press sleeve, and being designed to push the indicator ring to slide axially from the first position to the further position as the press jaws are closed.

This aspect of the press fitting assembly highlights operational synergy between the assembly components and a pressing tool, suggesting a configuration where the press sleeve can be radially compressible using opposing press jaws of the tool. It coordinates with strategic design elements to facilitate functional transitions and visual feedback.

The angled orientation of these contact surfaces is capable of enhancing directional force application, efficiently managing axial movement within the assembly. As the jaws engage these surfaces, the mechanical pressure enables a guided and managed transition of the indicator ring, providing feedback on effective tool interaction and operation completion.

The indicator ring may be designed using various polymers chosen for their physical and mechanical qualities, aiming to facilitate improved performance and durability across assembly operations. The selection of materials from the group including Polypropylene, Polyethylene, Polyoxymethylene, Thermoplastic Elastomers, Polyurethane, or Polyamide reflects a strategic approach to enhance the ring's quality and application efficacy.

Polypropylene and Polyethylene are known for their lightweight nature and resistance to chemicals, which can be advantageous in environments where durable and resilient components are beneficial. Such materials might contribute to a user-friendly design, enabling easy handling during installation and maintenance processes.

Using Polyoxymethylene introduces high mechanical stability and dimensional accuracy, suggesting it is connectable to features requiring precise engagement and smooth transitioning within the press fitting assembly. This material is recognized for its ability to maintain structural integrity under mechanical stress, which is beneficial in applications where reliable operation is highly appreciated.

Thermoplastic Elastomers bring elasticity and durability into the design, potentially improving flexibility and adaptability, especially when managing moving parts or maintaining secure connections within the assembly. These elastomers may be suitable when considering the mechanical interactions between different assembly stages.

Polyurethane is often chosen for its abrasion resistance and impact strength, promoting a longer lifespan in components exposed to high contact or movement frequencies. It may support innovative design elements to protect against wear and promote consistent performance.

Polyamide, characterized by robustness and thermal stability, can be tailored to accommodate more demanding environmental conditions, making it an excellent choice where resistance to high temperatures or external pressures is beneficial, thereby supporting operational viability across various contexts.

Selecting such polymers provides a balance between strength, flexibility, and resilience, aiding the indicator ring in performing effectively within the press fitting assembly. These material selections contribute to broader assembly objectives of reliability, user comfort, and handling assurance, enabling the assembly to operate efficiently and accurately across intended applications.

In developing this press fitting assembly, the stop ring is designed to limit the insertion depth of the pipe, thereby promoting secure and reliable press fits within the assembly. The choice of materials for the stop ring can reflect a focus on durability and precision engineering to support operation throughout assembly processes.

Polyoxymethylene, recognized for its mechanical strength and dimensional stability, may be suitable for applications requiring performance under stress. Utilizing this material in the stop ring can assist in maintaining the desired pipe insertion depth, guarding against shifts or misalignments during the pressing operation.

Polyamide, valued for its robustness and thermal resilience, can aid stability in environments with fluctuating temperatures. Incorporating polyamide in the stop ring offers reliability in pipe positioning, contributing to effectiveness across operational conditions.

Polycarbonate, known for its impact strength and clarity, is appealing for components exposed to pressures or movements. Its durability can help prevent deformation, allowing the stop ring to retain its form and function over usage periods. This supports the precision needed for proper pipe insertion and press fitting applications.

Polypropylene provides chemical resistance and a lightweight profile, facilitating handling during installation and maintenance tasks. Its versatility supports design configurations that may accommodate different fitting environments while securing pipe presence within the assembly.

The inclusion of these materials can enhance the structural and operational reliability of the press fitting assembly, reducing potential inaccuracies or assembly challenges. Limiting the pipe's insertion depth is beneficial for optimizing component interaction and promoting effective presses-these material selections reflect a strategic approach to support the assembly's usability and efficiency.

The pressing tool detailed herein includes a configuration with opposing press jaws, each capable of accommodating a press sleeve within a fitting assembly setup. These jaws are purposed to engage with the press sleeve of a fitting assembly, including possible variants discussed in prior passages, to compress the sleeve when closed, thereby supporting effective pipe fitting operations.

Each press jaw has a recess formed to receive the sleeve, aligning with conventional practices within press fitting contexts. Moreover, at least one of the jaws-or optimally each jaw-features inclined contact surfaces angled relative to the longitudinal axis of the recess. This angled formation is advantageous in guiding components during mechanical interaction.

The inclined contact surfaces assist in enabling axial movement of indicator rings attached to the press sleeve. These surfaces allow the ring's transition between a first position, where the indicator ring surrounds at least a section of the press sleeve's press area, and a further position offset from the press area. Such movement assists in visual indicators for assembly completion, offering intuitive and practical management of the press fitting process.

With their presence, the inclined surfaces support an integrated tool design focused on ease of use and operational effectiveness. They may ease automation transitions and provide immediate feedback on the state of sleeves during compression, potentially enhancing user understanding and confidence.

The detailed geometry and interactions enabled by the inclined contact surfaces can optimize the pressing tool's precision and reliability. This promotes efficient assembly/connections, potentially reducing complications and enhancing the operational integrity of press fitting processes.

The manufacturing method detailed herein is designed to craft a press fitting assembly featuring an innovative approach to visual indicators and component interaction. This method includes processes aiming to enhance operational clarity and functional efficacy in assembling press fittings.

Initially, the process involves applying a distinct color to at least one indicator surface on a press area of the press sleeve, which is separate from and connectable to the fitting body of the assembly. The use of color may provide a visual distinction, supporting visual feedback mechanisms and aiding users in identifying the current state of the press fitting assembly.

Following this, the method includes securely connecting at least one indicator ring to the press sleeve. The ring is axially slidable, offering flexible positional updates that reflect the assembly's operational status. This sliding capability can ensure that the indicator ring may move between specific positions.

In the first position, the indicator ring surrounds an end region of the press area adjacent to the stop ring. This arrangement keeps the indicator surface visible, offering a visual indication that no pressing tool has been applied to the press area.

Alternatively, the indicator ring might slide to a further position where it becomes offset from the press area, concealing the indicator surface. This change visually signals that the pressing tool has engaged with the press area, confirming the execution of the pressing operation.

Through this method, the press fitting assembly is constructed with user-friendly visual guidance, enhancing interaction efficiency and potentially reducing the chance of assembly errors. It might facilitate intuitive assessments during fitting procedures and simplify verification checks, improving precision and reliability within pipe installation contexts.

Integrating the above described embodiments enhances the reliability, user-friendliness, and capability for minimizing error. All embodiments reflect mechanical interactions and visual signaling, fostering precise and efficient installations of composite pipes, showcasing assembly status verification, elevating the assembly's functional efficacy in practical applications.

The present invention finally refers to the use of the press fitting assembly as described above and/or of the pressing tool as described above and/or of the press fitting assembly manufactured by the method as described above to create at least one secure, durable, and leak-proof connection in a multilayer composite pipe (MLCP) system, which is for example employed for transporting hot and cold water in residential, commercial, and industrial plumbing and heating applications.

### Brief explanation of the drawings

As already discussed above, there are several options to embody as well as to improve the teaching of the present invention in an advantageous manner. To this aim, reference is made to the claims respectively dependent on claim 1; further improvements, features and advantages of the present invention are explained below in more detail with reference to two preferred embodiments by way of example and to the accompanying drawings which illustrate:
**Figure 1****:** Exploded view of a first embodiment of the press fitting assembly, illustrating the manufacturing procedure involving a pre-tensioned indicator ring.
**Figure 2****:** Detailed longitudinal section of the press sleeve showing the indicator ring in the first position, pressed against the stop ring to develop pre-tension, and secured by an inward-turning lip.
**Figure 3****:** Longitudinal section of the press sleeve depicting the indicator ring positioned in the first position.
**Figure 4****:** Side view of the press sleeve where the indicator ring remains in the first position, indicating that no pressing action has yet occurred on the pressing area.
**Figure 5****:** Detailed longitudinal section of the press sleeve with the indicator ring in a further position, indicating that pressing action has been performed on the pressing area.
**Figure 6****:** Longitudinal section of the press sleeve showing the indicator ring arranged in the further position.
**Figure 7****:** Side view of the press sleeve with the indicator ring in the further position.
**Figure 8****:** Detailed view of the indicator ring assembly in the press fitting configuration, displaying the ring in the first position, with no pipe present in the press sleeve.
**Figure 9****:** Detailed view of the indicator ring assembly where the ring is in the first position, showcasing a pipe arranged within the press sleeve, allowing for secure connection upon compression.
**Figure 10****:** Detailed view of the indicator ring assembly with the indicator ring positioned in the further position, indicating that pressing action has been performed on the pressing area.
**Figure 11****:** Press fitting assembly of the embodiment from figure 8.
**Figure 12****:** Press fitting assembly of the embodiment from figure 10.
**Figure 13****:** Press tool featuring jaws in a partially open position, with mirror-image symmetry between the two jaws.
**Figure 14****:** Press tool with jaws in a closed position.
**Figure 15****:** Detailed view of the press fitting assembly with the pressing tool in a partially open position; the inclined wedge surface of the jaws lifts the indicator ring from its lock on the stop ring.
**Figure 16****:** Detailed view of the press fitting assembly with the pressing tool in a closed position; the pre-tensioned indicator ring retracts to nominal size, moving towards the fitting body along the slope of the stop ring.
**Figure 17****:** Longitudinal section of a second embodiment of the press fitting assembly, showing a sliding press indicator ring in the first position.
**Figure 18****:** Close-up of reference D from figure 17, illustrating fastening elements on the press sleeve that secures the indicator ring in the first position.
**Figure 19****:** Close-up of reference A from figure 17, depicting the indicator ring in the first position with no pipe present, featuring the elastic protrusion extending into the interior space of the press sleeve.
**Figure 20****:** Close-up of reference A showing the indicator ring in the first position, where a pipe is inserted, enabling secure connection; the elastic protrusion indicates correct pipe placement by extending outward.
**Figure 21****:** Close-up of reference A showing the indicator ring in the further position, with the elastic protrusion compressed between the stop ring and the indicator ring.
**Figure 22****:** Three-dimensional view showcasing the longitudinal section of the press fitting assembly of figure 17.
**Figure 23****:** Longitudinal section of the press fitting assembly of figure 17 with the pressing tool in partially open claws and the indicator ring in the first position.
**Figure 24****:** Side view of the press fitting assembly of figure 17 with the indicator ring positioned in the first state.

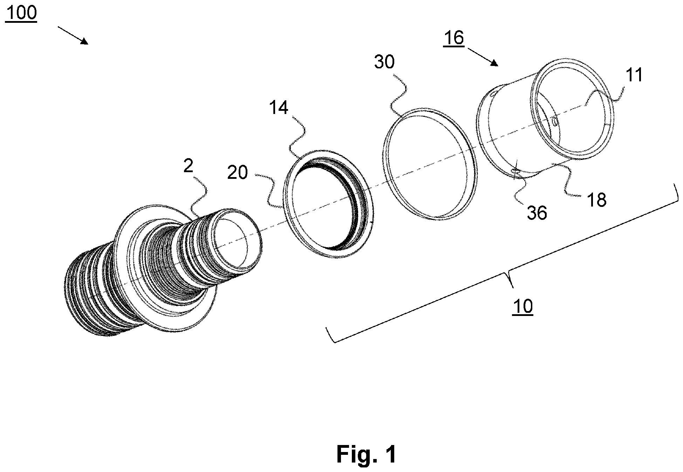

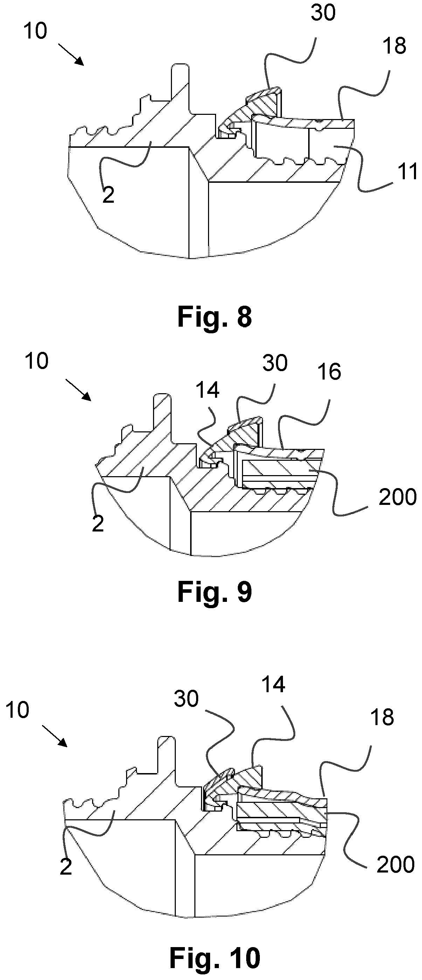

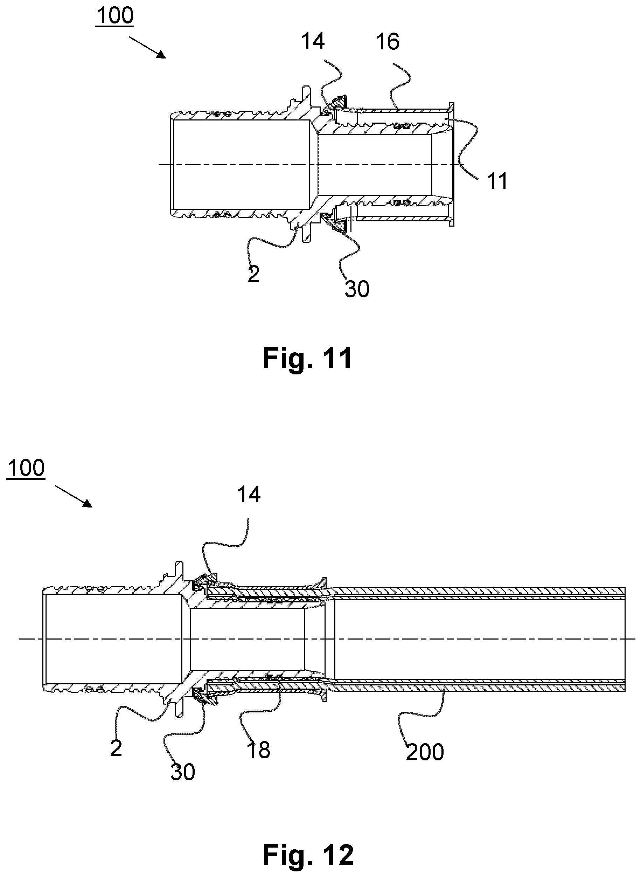

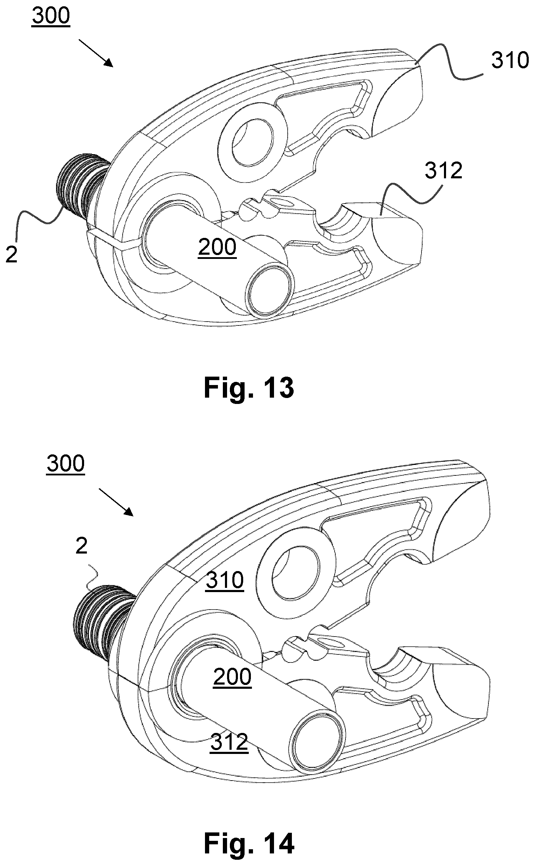

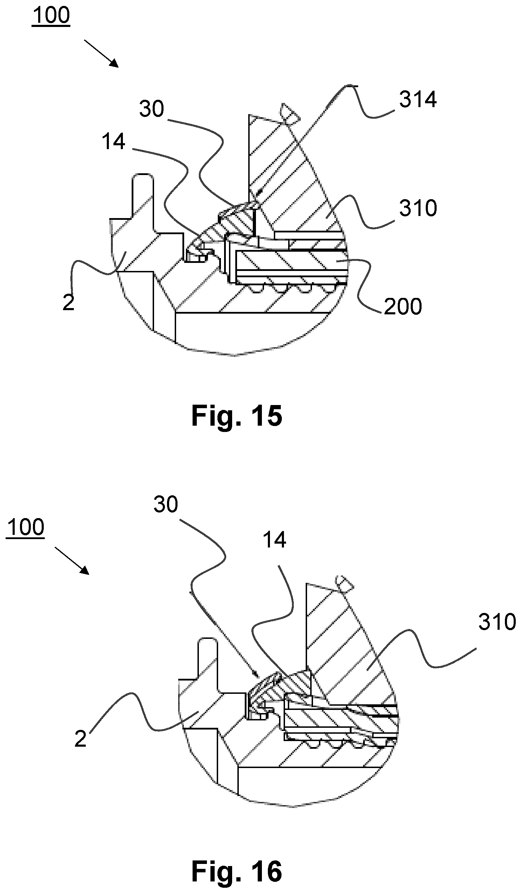

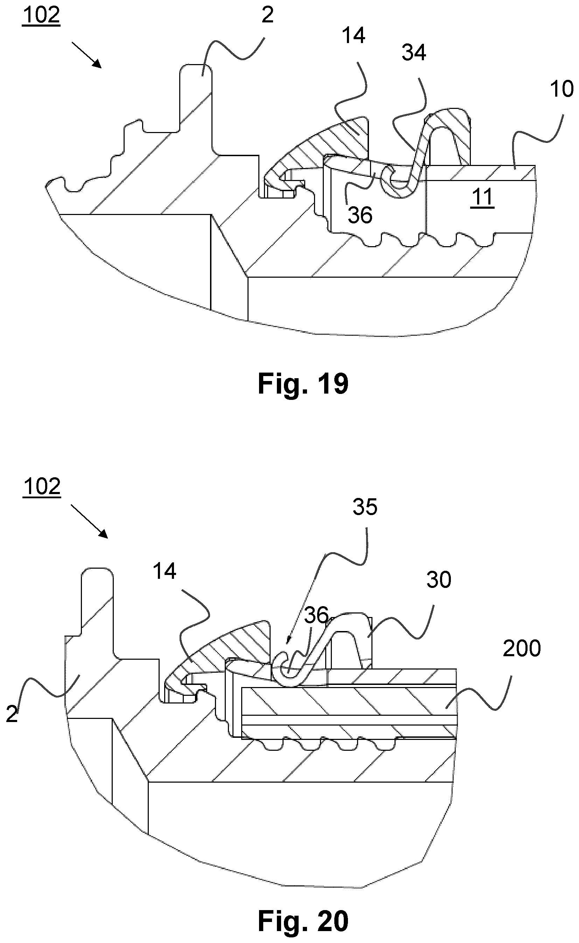

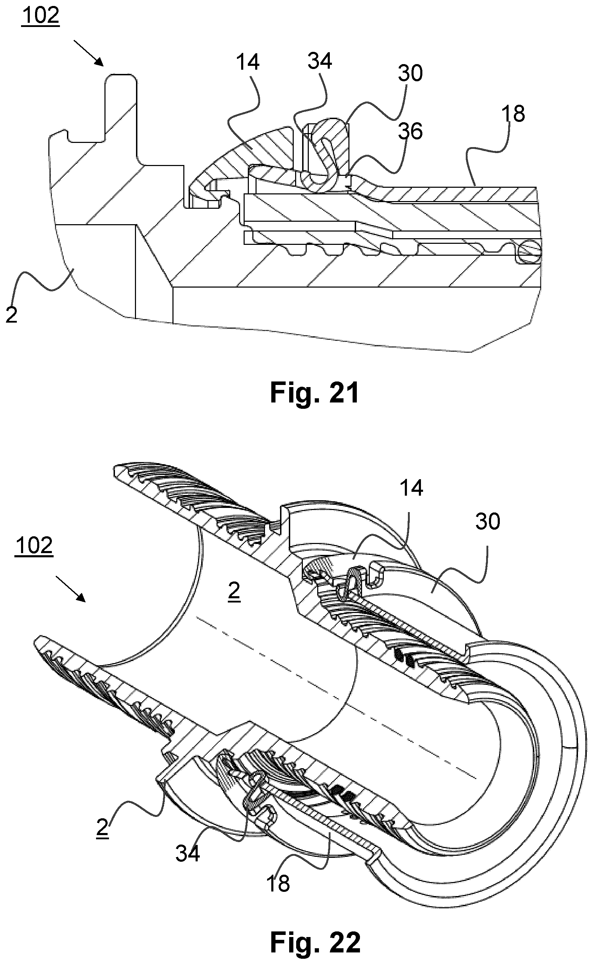

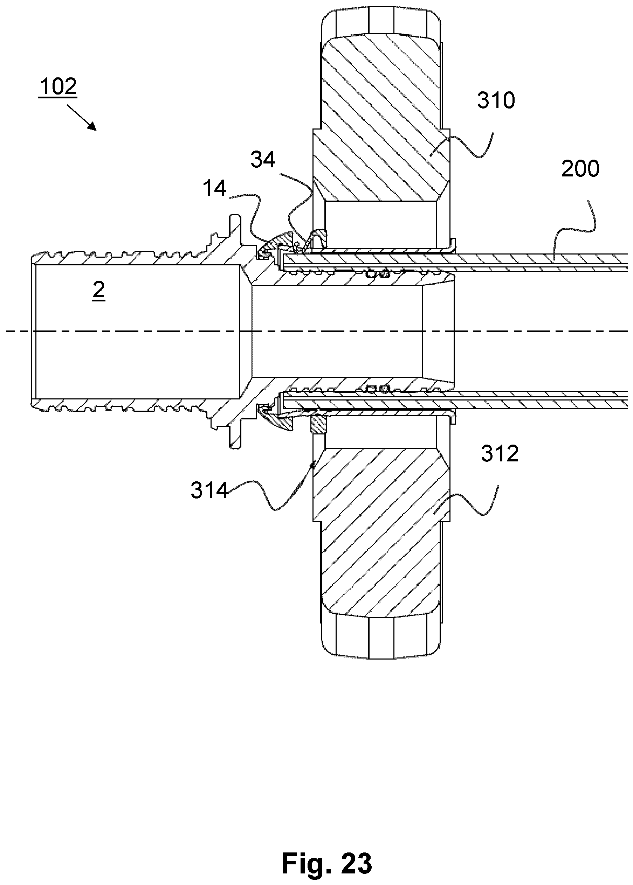

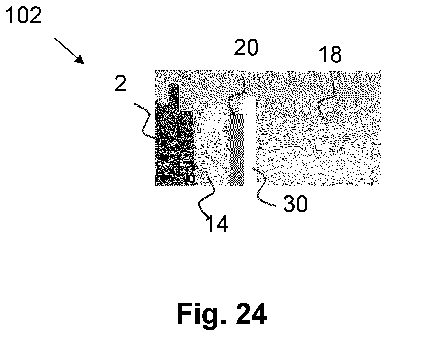

The same reference numerals are used for corresponding parts in Fig. 1 to Fig. 24.

### Exemplary ways of embodying the present invention

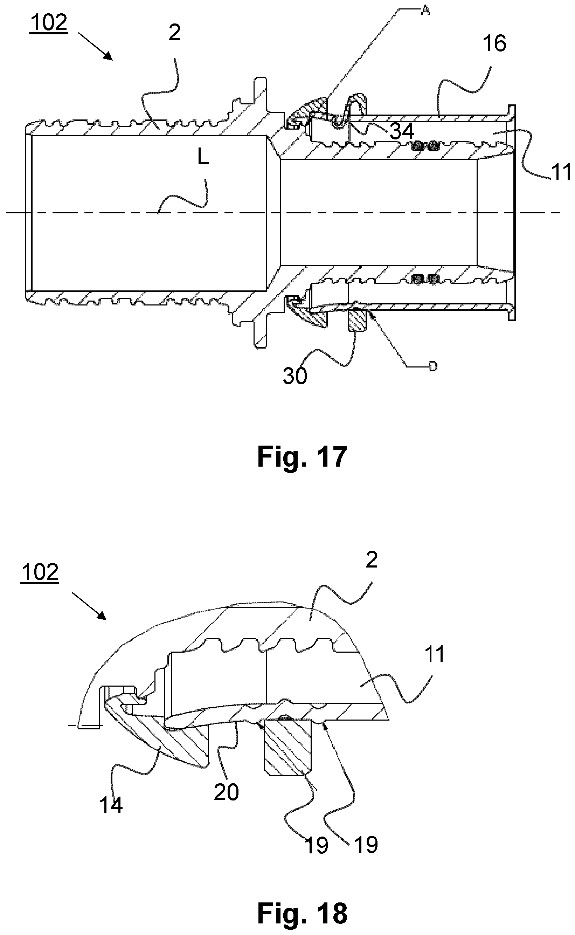

In order to avoid unnecessary repetitions, the following description regarding the embodiments, characteristics and advantages of the present invention relates (unless stated otherwise)
- to the first embodiment of the press fitting assembly 100 according to the present invention (cf. Figs 1 to 16) as well as
- to the second embodiment of the press fitting assembly 102 according to the present invention (cf. Figs 17 to 24).

Both embodiments 100, 102 being designed to work according to the method of the present invention.

Fig. 1 shows an exploded view of a press fitting assembly 100 featuring a press sleeve 10 and a fitting body 2 suitable for connecting to a pipe 200, notably a multilayer composite pipe 200. **The** illustration discloses various components arranged along the longitudinal axis L. At the forefront, the fitting body 2 is depicted, which serves as the main connection point to the pipe 200 within the press fitting assembly 100. Adjacent to the fitting body 2, the press sleeve 10 is arranged, highlighting the cylindrical shape designed to encompass and securely compress a pipe section 200.

Further detailed, this assembly incorporates a stop ring 14, fixedly attached to the press sleeve 10, effectively defining the press area 18 in the axial direction.

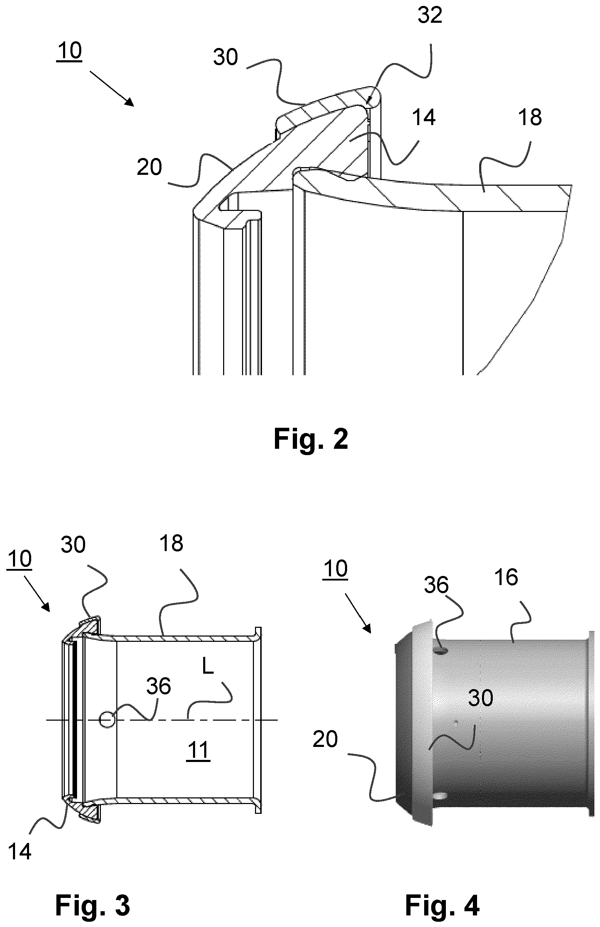

Notably, the press sleeve 10 includes at least one distinctly colored indicator surface 20, and an indicator ring 30 that is securely affixed yet axially movable. Initially, the indicator ring 30 is in a first position, covering an end region of the press area 18 adjacent to the stop ring 14, which exposes the indicator surface 20 as a cue that no pressing tool 300 is engaged. When a pressing tool 300 is applied, the indicator ring 30 moves axially, thereby concealing the indicator surface 20 (cf. figures 2 to 16).

The connection method involves inserting the pipe 200 into the press sleeve 10 and placing the press area 18 within recesses 36 of opposing press jaws 310 and 312 of a pressing tool 300. Closing the press jaws compresses the press area 18, establishing a secure joint and displacing the indicator ring 30 to cover the indicator surface 20.

The design incorporates clamping elements 32, namely an inward-turning lip, that engage the stop ring 14, ensuring a preload force to maintain the indicator ring 30 in its initial position. During assembly, the pre-tensioned indicator ring 30 is positioned over a modified stop ring edge, which radially expands the indicator ring 30 under tension.

The press tool's 300 inclined contact surface, such as beveled jaw edge 314, engages the indicator ring 30, triggering a snap connection release. Consequently, the indicator ring 30 contracts and traverses along a sloped surface of the stop ring 14 to cover an indicator red color 20, which visually communicates the unpressed state of the sleeve. Reaching its end state, this embodiment may display a neutral white or a positive green color, denoting that the sleeve has been pressed.

The materials for parts like the indicator ring 30 and stop ring 14 or retaining ring may include polymers such as polypropylene or polyamide, supporting structural integrity and operational clarity.

Key components of this first embodiment are
- the two-tone stop ring 14, which acts as the base for the indicator mechanism, and
- the pre-tensioned indicator ring 30 or cover ring, which interacts with tool jaws 310, 320 to indicate the pressed state while ensuring an unobstructed view of the indicator color around the fitting.

The design eliminates installation waste commonly produced by traditional fitting sleeve foils. It offers comprehensive visibility of the pressed state, presenting an indicator 20 that is visible from all orientations. Additionally, the cover ring 30 results in a clean appearance that is ideal for surface-mounted applications, preventing unsightly residual materials after installation.

Figures 2-4, 8, 9, 11 and 13 shows the press sleeve 10, detailing the indicator ring 30 in the first position, which surrounds the press area 18, indicating no pressing action has occurred. This configuration aids installers in verifying readiness for compression.

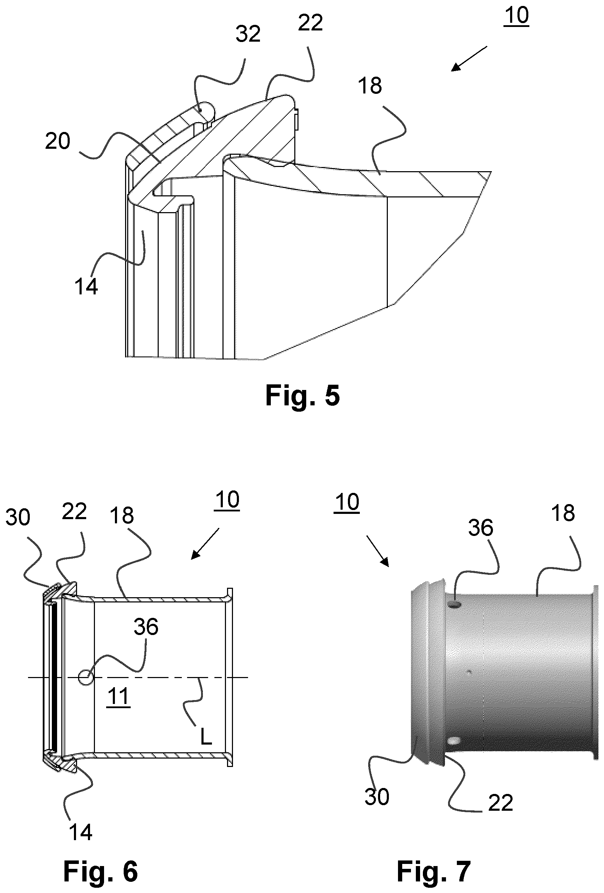

Figures 5, 6, 10 and 12 shows the press sleeve 10 with the indicator ring 30 in the further position, covering the indicator surface 20. The indicator ring's movement is triggered by pressing jaws 310 and 312 during installation, confirming a completed pressing action.

Figures 17 to 24 depict a second embodiment of a press fitting assembly 102 according to the present invention. This embodiment employs press fitting components as described in WO 2019 201 5 00, wherein instead of a banderole, it is supplemented with additional color indicators incorporated into a stainless-steel sleeve and a injection-molded plastic indicator ring 30. This embodiment specifically targets visibility of the installation process regarding pipe insertion and sleeve pressing states.

In this embodiment, the sleeve 10 features an indication hole 36, serving as an anchor for the elastic protrusion 34 or spring part. When the pipe 200 is properly inserted, the spring arm 34 is elevated, providing a visual cue. Indicator color activates upon full insertion, signaling the installer that the connection is secure. Similar to the first embodiment, a beveled edge 314 on the jaws 310, 320 aids in effective ring functionality during the pressing process.

Key component of this embodiment is the Sliding Indicator Ring 30 with elastic hook providing a visual confirmation of whether the pipe is correctly arranged in the sleeve 10 and whether the sleeve 10 has been effectively pressed.

Both embodiments maintain the essential functional benefits of existing press fittings, while introducing key improvements:
- Reduction of plastic waste created during installation processes.
- A comprehensive system providing installers with clear, all-around visibility on sleeve engage confirmation.
- Aesthetic appeal and the ability to effectively mark sizes through color-coded reflective indicator rings.
- The superior visibility of installation quality in low-light conditions and easy identification from distance, addressing safety and operational efficiency.

The proposed inventions present significant advancements over current press fitting technologies, primarily through the integration of effective visual indicators and sustainable design practices. By minimizing waste and enhancing indication mechanisms, the inventiveness of both embodiments meet contemporary customer needs for efficient and environmentally responsible plumbing solutions. The use of reflective markings and clear assembly signals establishes a new standard in press fitting technology, distinguishing these embodiments from existing state-of-the-art solutions.

### List of reference numerals

- 2: fitting body
- 10: press sleeve
- 11: interior space of the press sleeve 20
- 14: stop ring of the press sleeve
- 16: cylindrical corpus of the press sleeve comprising a press area
- 18: press area of the press sleeve 10
- 19: fastening elements, in particular locking bumbs, arranged at the cylindrical corpus 16 of the press sleeve 10 for
- 20: indicator surface, in particular first indicator surface
- 22: further indicator surface
- 30: indicator ring or indication ring
- 32: clamping element, in particular lip of the indicator ring
- 34: elastic protrusion, in particular a spring arm or an indicator hook, of the indicator ring 30
- 35: end of the elastic protrusion 34
- 36: recess, in particular indicator window or indicator hole for viewing the interior space 11 of the press sleeve 10
- 100: press fitting assembly first embodiment cf. figures 1 to 16
- 102: press fitting assembly second embodiment cf. figures 17 to 24
- 200: pipe, in particular multilayer composite pipe
- 300: pressing tool or press tool, such as press-fit tool, designed to crimp or press the press fitting assembly 100 onto the pipe 200 to create secure, leak-proof connection without soldering or threading
- 310: first press jaw of the pressing tool 300
- 312: further press jaws of the pressing tool 300
- 314: inclined contact surface,
- L: longitudinal axis of the sleeve 10

## Claims

1. A press fitting assembly (100; 102) for a pipe joint comprising:
a fitting body (2) for connecting the press fitting assembly (100) to a pipe (200), in particular a multilayer composite pipe,
a press sleeve (10) separate from and attached to the fitting body (2) and having
- a substantially cylindrical press area (18) designed to be compressed to create a secure connection with the fitting body (2), and
- at least one stop ring (14) fixedly attached to the press sleeve (10) to define the press area (18) in the axial direction,
**characterized in that**
the press sleeve (10), in particular the stop ring (14), comprises
- at least one indicator surface (20) of a different color to the press area (18) of the press sleeve (10) and
- at least one indicator ring (30)
-- being securely attached to the press sleeve (10) and
-- being axially slidable on the press sleeve (10) between
--- a first position in which it coaxially surrounds an end region of the press area (18) facing the stop ring (14), thus uncovering the indicator surface (20) to provide a visual indication that no pressing tool (300) has been arranged on the press area (18), and
--- a further position, in which it is offset from the press area (18) and covers the indicator surface (20).

2. The press fitting assembly according to claim 1, **characterized in that** to enhance visibility of the indicator surface (20), it is marked with at least one reflective color that interacts with light to produce visible color effects, for example color constancy, color shifting, or other optical phenomena observable under varying viewing angles or lighting conditions.

3. The press fitting assembly according to claim 1 or 2, **characterized in that** the indicator ring (30) is securely attached to the stop ring (14) and axially slidable on the stop ring (14) between the first position and the further position.

4. The press fitting assembly according to at least one of claims 1 to 3, **characterized in that** the indicator ring (30) comprises at its end faced to the press sleeve (10) at least one clamping element (32), in particular a lip, being designed to engage with the stop ring (14), wherein in the first position, the clamping element (32) engages with the stop ring (14), in particular with an end of the stop ring (14) facing the press sleeve (10), providing an elastic clamping force that creates a preload between the clamping element and the stop ring (14).

5. The press fitting assembly according to at least one of claims 1 to 4, **characterized in that**
- the indicator surface (20), which is covered in the further position, when the stop ring (14) is arranged offset from the press area (18), is a first indicator surface (20), and
- the stop ring (14) comprises at least one further indicator surface (22) adjacent to the press area (18),
-- wherein the respective indicator surfaces (20, 22) have different colors,
-- wherein the first indicator surface (20) is spaced from the press area (18) by the further indicator surface (22),
-- wherein in the first position, the press indicator ring (30) covers the further indicator surface (22) and uncovers the first indicator surface (20) for providing a visual indication that no pressing action has been performed on the pressing area, and
-- wherein in the further position the press indicator ring (30) covers the first indicator surface (20) and uncovers the further indicator surface (22) for providing a visual indication that a pressing action has been performed on the pressing area.

6. The press fitting assembly according to at least one of claims 1 or 2, **characterized in that** the indicator ring (30)
- is securely attached to a cylindrical corpus (16) comprising the cylindrical press area (18) of the press sleeve (10) and
- is axially slidable on the cylindrical corpus (16) between the first position and the further position.

7. The press fitting assembly according to at least one of claim 6, **characterized in that**
- the indicator ring (30) comprises an elastic protrusion (34), such as a spring arm or an indicator hook, and
- the press sleeve (10) comprises at least one recess (36), in particular an indicator window, adjacent to the stop ring (14) on the side facing the press area (18), designed to receive the elastic protrusion (34) of the indicator ring (30),
-- wherein in the first position the press indicator ring (30) is axially offset from the recess (36) and the elastic protrusion (34) is in an expanded configuration extending from an area offset from the recess (36) to the recess (36),
-- wherein in the further position, the indicator ring (30) is arranged within the recess (36), and the elastic protrusion (34) is compressed between the stop ring (14) and the indicator ring (30).

8. The press fitting assembly according to at least one of claim 7, **characterized in that** in the first position
- when no pipe (200) is present in the press sleeve (10), the elastic protrusion (34) extends through the recess (36) into an interior space (11) of the press sleeve (10), with its end (35) either flush with the circumference of the press sleeve (10) or positioned within the interior space (11), and
- conversely, when a pipe (200) is arranged in the sleeve (10) in such way that a secure connection can be established between the pipe (200) and the fitting body (2) by compressing the sleeve (10), the elastic protrusion extends through the recess (36) to an exterior space surrounding the press fitting assembly (102), with its end (35) protruding radially outward beyond the circumference of the press sleeve (10), indicating that the pipe (200) is correctly arranged in the press sleeve (10).

9. The press fitting assembly according to claim 7 or 8, **characterized in that** to enhance visibility of the end (35) of the elastic protrusion (34), this end (35) is marked with at least one color, in particular with the reflective color.

10. The press fitting assembly according to at least one of claims 1 to 9, **characterized in that** the indicator ring (30) is manufactured by injection molding.

11. The press fitting assembly according to at least one of claims 1 to 10, **characterized in that** the press fitting assembly (100, 102) is designed to cooperate with a pressing tool (300) such that the press sleeve (10) is radially compressible by opposing press jaws (310, 312) of the pressing tool (300), wherein the indicator ring (30) and/or the pressing tool (300) comprises at least one inclined contact surface (314) being angled relative to the longitudinal axis of the press sleeve (10), and being designed to push the indicator ring (30) to slide axially from the first position to the further position as the press jaws (310, 312) are closed.

12. The press fitting assembly according to at least one of claims 1 to 11 **characterized in that** the indicator ring (30) is composed of at least one polymer selected from the group of Polypropylene (PP), Polyethylene (PE), polyoxymethylene (POM), Thermoplastic Elastomers (TPE), Polyurethane (PU), or Polyamide (PA).

13. The press fitting assembly according to at least one of claims 1 to 12 **characterized in that** the stop ring (14) is composed of at least one of the following materials: polyoxymethylene (POM), polyamide (PA), polycarbonate (PC), or polypropylene (PP), wherein the stop ring (14) is configured to limit the insertion depth of the pipe (200) into the press fitting assembly (100), ensuring a secure and reliable press fit.

14. A pressing tool (300) comprising opposing press jaws (310, 312) each having a recess (314) formed therein for receiving a press sleeve (10) of a fitting assembly (100; 102), in particular of the fitting assembly according to at least one of claims 1 to 13, wherein the pressing tool (300) is designed to compress the press sleeve (10) when the opposing jaws (310, 312) are closed, **characterized in that** at least one of the press jaws (310, 312), preferably each press jaw (310, 312), comprises at least one inclined contact surface (314) that is angled relative to a longitudinal axis of the recess (314), wherein the inclined contact surface (314) is designed to enable an axially movement of at least one indicator ring (30) being attached to the press sleeve (10) slidable between a first position in which the indicator ring (30) coaxially surrounds at least a section of a press area (18) of the press sleeve (10) and a further position in which it is axially offset from the press area (18).

15. Method for connecting a press fitting assembly (100; 102), in particular a press fitting assembly (100) according to at least one of claims 1 to 13, with a pipe (200), in particular a multilayer composite pipe, **characterized by**
- inserting an end of the pipe (200) into a press sleeve (10) of the fitting assembly (100; 102),
- receiving a press area (18) of the press sleeve (10) in respective recesses (314) of opposing press jaws (310, 312) of a pressing tool (300), in particular of the pressing tool (300) according to claim 14,
- compressing the press area (18) by closing the press jaws (310, 312) to create a secure connection between the pipe (200) and the press fitting assembly (100; 102), wherein the pressing tool (300) cooperates with the press sleeve (10) such, that an axially movement of at least one indicator ring (30) being attached to the press sleeve (10) is enabled when closing the press jaws (310, 312), wherein the indicator ring (30) slides from a first position, in which the indicator ring (30) coaxially surrounds at least a section of a press area (18) of the press sleeve (10) and uncovers least one indicator surface (20) of a different color to the press area (18) of the press sleeve (10) to a further position in which it is axially offset from the press area (18) and covers the indicator surface (20).
